# EUROPÄISCHE PATENTSCHRIFT

(11) **EP 2 485 931 B1**
(45) Veröffentlichungstag und Bekanntmachung des Hinweises auf die Patenterteilung: **15.05.2013**
(21) Anmeldenummer: 10768710.5
(22) Anmeldetag: 06.10.2010
(51) Int. Cl.: B60T 17/04, B29C 45/00, B60D 1/64

(54) **KUPPLUNGSKOPF MIT ALS SPRITZGUSSFORMLING AUS KUNSTSTOFF AUSGEBILDETEM GEHÄUSE**
COUPLING WITH INJECTION- MOULDED PLASTIC HOUSING
TETE D'ACCOUPLEMENT PLASTIQUE MOULÉ PAR INJECTION

(30) Priorität: 07.10.2009 DE 102009048446
(43) Veröffentlichungstag der Anmeldung: 15.08.2012
(73) Patentinhaber: Knorr-Bremse Systeme für Nutzfahrzeuge GmbH, 80809 München (DE)
(72) Erfinder: MUSER, Michael, 85276 Pfaffenhofen (DE); KONCZ, László, H-6000 Kecskemét (HU); DALI, István, H-6000 Kecskemét (HU)
(74) Vertreter: Mattusch, Gundula
(86) Internationale Anmeldenummer: PCT/EP2010/064890
(87) Internationale Veröffentlichungsnummer: WO 2011/042455

(56) Entgegenhaltungen:
- WO-A1-2009/065558
- CH-A- 530 890
- DE-A1- 2 721 509
- US-B1- 7 021 334

## Beschreibung

Die Erfindung geht aus von einem Kupplungskopf zur pneumatischen Verbindung der Bremsanlagen eines Zugfahrzeugs und eines Anhängers, gemäß dem Oberbegriff von Anspruch 1 und von einem Verfahren zu seiner Herstellung gemäß dem Oberbegriff von Anspruch 4.

Ein solcher Kupplungskopf ist beispielsweise aus der CH 530 890 B bekannt, wobei das Gehäuse aus Metall besteht und beispielsweise ein Aluminiumdruckgussteil ist. Wenigstens ein Ende einer solchen Druckluftleitung wird üblicherweise von einer Verstärkungshülse umschlossen, wobei die Verstärkungshülse auf der Druckluftleitung vormontiert ist. Die Verstärkungshülse dient dazu, um bei einer Biegebeanspruchung der Druckluftleitung diese zu entlasten bzw. ein Knicken der Druckluftleitung zu vermeiden.

Die Druckluftleitung wird dann mit ihrem von der Verstärkungshülse umschlossenen Ende in dem Anschluss am Gehäuse mittels eines sog. Fittings befestigt, d.h. dass das Ende der Druckluftleitung mit einem Passstück in die Anschlussbohrung hinein geschoben wird und diese Position dann von einer äußeren Überwurfmutter gesichert wird. Damit wird eine lösbare Verbindung zwischen dem Gehäuse einerseits und der Druckluftleitung mit der vormontierten Verstärkungshülse andererseits realisiert.

Die US 7 021 334 B1 offenbart eine Kupplungsverbindung zwischen einer Fluidquelle und einer Fluidleitung, insbesondere zwischen einem Kupplungskopf am Zugfahrzeug und einer zum Anhänger führenden Druckluftleitung. Der Kupplungskopf ist mehrteilig ausgebildet und beinhaltet einen aus zwei Teilen bestehenden Grundkörper sowie einen an dem einen Teil integral ausgebildeten Arm.

In der WO 2009/065558 A1 wird ein Verfahren zur Herstellung eines Feststellbremsventils eines Nutzfahrzeugs beschrieben, bei dem ein über vier Anschlüsse für vier pneumatische Leitungen verfügendes Gehäuseteil, die Leitungen sowie eine am freien Ende der Leitungen angeordnete Verbindungsplatte in einem Fertigungsschritt durch Urformen hergestellt werden.

Die DE 27 21 509 offenbart einen Kupplungskopf mit eingebauter Absperreinrichtung.

Der vorliegenden Erfindung liegt die Aufgabe zugrunde, einen Kupplungskopf derart weiter zu entwickeln, dass er einfach und kostengünstig zu fertigen ist. Weiterhin soll ein Verfahren zu seiner Herstellung angeben werden.

Diese Aufgabe wird erfindungsgemäß durch die kennzeichnenden Merkmale von Anspruch 1 und Anspruch 4 gelöst.

### Vorteile der Erfindung

Die Erfindung basiert auf dem Gedanken, dass wenigstens ein den wenigstens einen Anschluss aufweisender Teil des Gehäuses des Kupplungskopfes zusammen mit der Verstärkungshülse als einstückiger Spritzgussformling aus Kunststoff ausgebildet und ein freies Ende der Druckluftleitung durch die Verstärkungshülse hindurch und in eine Anschlussbohrung des Anschlusses hinein ragend mit dem Spritzgussformling stoffschlüssig verbunden ist.

Das erfindungsgemäße Verfahren zur Herstellung des Kupplungskopfes sieht vor, dass ein freies Ende der Druckluftleitung in ein Spritzgusswerkzeug zum Spritzgießen des wenigstens aus der Verstärkungshülse und dem den wenigstens einen Anschluss aufweisenden Teil des Gehäuses bestehenden Spritzgussformling aus spritzgiessbaren Kunststoff an einer Stelle positioniert wird, an welcher der wenigstens eine Anschluss vorgesehen ist und dass dann das Ende der Druckluftleitung beim Spritzgießen des Spritzgussformlings von dem Kunststoff umspritzt wird, um eine stoffschlüssige Verbindung zwischen dem Spritzgussformling und der Druckluftleitung auszubilden.

Somit werden das Gehäuse oder zumindest der den wenigstens einen Anschluss beinhaltende Teil des Gehäuses, die Verstärkungshülse und die Druckluftleitung als Baueinheit in einem einzigen Spritzgussarbeitsgang hergestellt bzw. miteinander verbunden. Diese Vorgehensweise spart eine händische Montage der Bauteile sowie das Vorsehen von Fittings ein, weshalb der erfindungsgemäße Kupplungskopf günstig zu fertigen ist.

Durch die in den Unteransprüchen aufgeführten Maßnahmen sind vorteilhafte Weiterbildungen und Verbesserungen der in Patentanspruch 1 angegebenen Erfindung möglich.

Besonders bevorzugt ist von dem Gehäuse des Kupplungskopfes wenigstens der den wenigstens einen Anschluss aufweisende Teil des Gehäuses zusammen mit der Verstärkungshülse ein einstückiger Spritzgussformling aus Polyamid.

Zur Ausbildung einer besonderes guten Stoffschlusses zwischen der Druckluftleitung und dem während dem Spritzvorgang hergestellten Gehäuse nebst Verstärkungshülse wird bevorzugt wenigstens das freie Ende der Druckluftleitung vor dem Positionieren in dem Spritzgusswerkzeug vorgeheizt.

Genaueres geht aus der folgenden Beschreibung der Ausführungsbeispiele hervor.

### Zeichnungen

Nachstehend ist ein Ausführungsbeispiel der Erfindung in der Zeichnung dargestellt und in der nachfolgenden Beschreibung näher erläutert. In der Zeichnung zeigt
- Fig.1: eine Vorderansicht eines Kupplungskopfes gemäß einer bevorzugten Ausführungsform;
- Fig.2: eine Seitenansicht des Kupplungskopfes von Fig.1;
- Fig.3: eine Querschnittsdarstellung des Kupplungskopfes von Fig.1 entlang der Linie III-III;

### Beschreibung des Ausführungsbeispiels

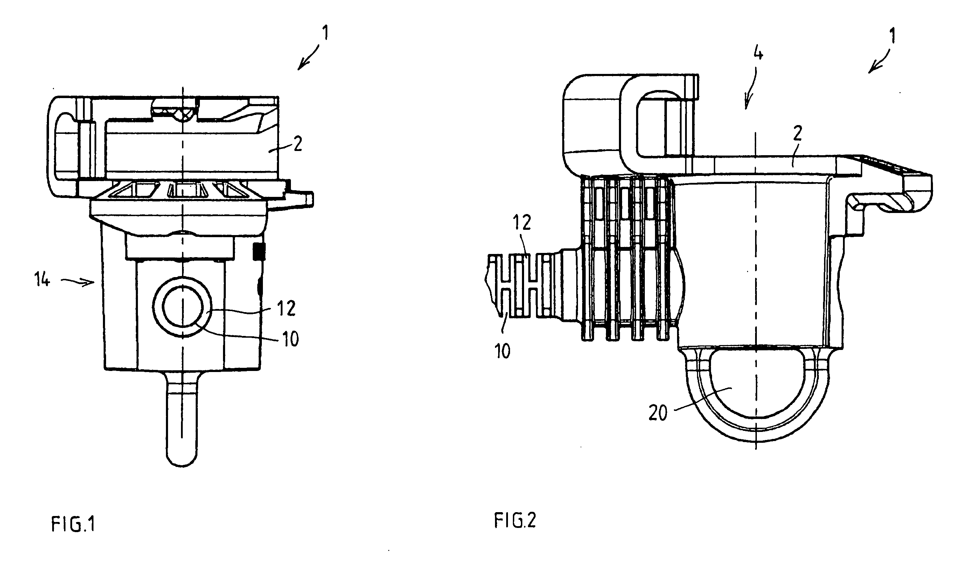

Die in Fig.1 insgesamt mit 1 bezeichnete Ausführungsform eines Kupplungskopfes zur pneumatischen Verbindung der Bremsanlagen eines Zugfahrzeugs und eines Anhängers weist ein Gehäuse 2 auf, an welchem in beispielsweise aus DE 199 31 162 A1 bekannter Weise eine hier nicht interessierende Klaue und eine Führungsleiste ausgebildet sind. Mit Hilfe der Klaue und der Führungsleiste kann der Kupplungskopf 1 mit einem weiteren Kupplungskopf gekuppelt werden.

Bei Kupplungsköpfen 1 der beispielhaft wiedergegebenen Ausführungsform ist im allgemeinen in einem der Kupplungsköpfe ein Absperrglied vorgesehen, im allgemeinen ist dies der Kupplungskopf am Zugfahrzeug. Der in Fig.1 wieder gegebene Kupplungskopf 1 ist aber beispielsweise für einen Anhänger vorgesehen.

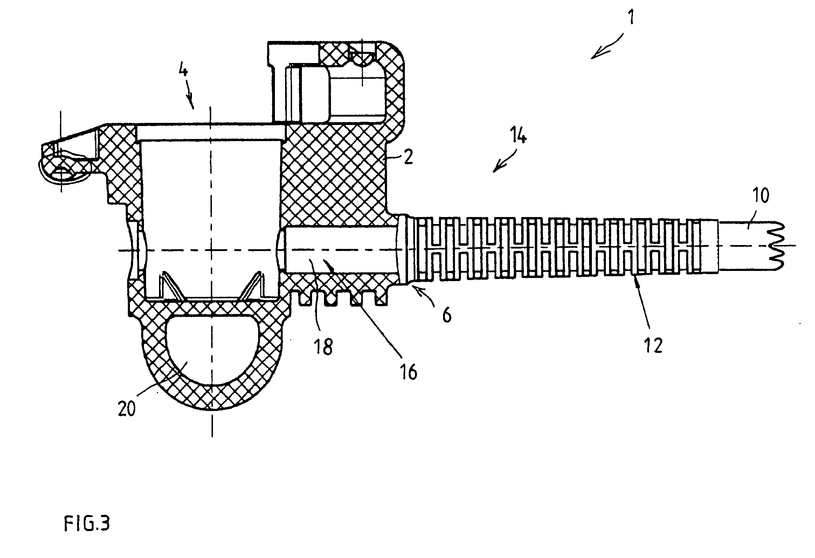

Wie insbesondere aus Fig.3 hervorgeht, weist der Kupplungskopf 1 einen Anschluss 4 als Energiezufluss und einen anderen Anschluss 6 als Energieabfluss auf. Bei einem derartigen Aufbau wird Druckluft vom nicht dargestellten Gegenkupplungskopf in den einen Anschluss 4 geleitet und verlässt den Kupplungskopf 1 durch den anderen Anschluss 6 als Energieabfluss. Grundsätzlich ist die Strömungsrichtung der Druckluft auch umkehrbar, derart, dass die Druckluft von dem anderen Anschluss 6 nach Passieren des Kupplungskopfes 1 den einen Anschluss 4 als Energieabfluss verlässt und in den Gegenkupplungskopf geführt wird.

Das dargestellte Ausführungsbeispiel gibt einen vorzugsweise für Anhänger verwendeten Kupplungskopf 1 wieder, bei welchem Druckluft vom Zugfahrzeug durch den einen Anschluss 4 als Energiezufluss in den Kupplungskopf 1 gelangt und diesen durch den anderen Anschluss 6 als Energieabfluss verlässt. Nachdem Kupplungsköpfe 1 der in Rede stehenden Art zur Verbindung von Vorratsleitungen und Bremsleitungen dienen, ist mit der Bezeichnung Druckluft einerseits Vorrats-Druckluft und andererseits Bremsleitungs-Druckluft bezeichnet.

Die beiden Anschlüsse 4, 6 des Kupplungskopfes 1 sind in einem Gehäuse 2 ausgebildet, wobei der andere Anschluss 6 für eine flexible Druckluftleitung 10 vorgesehen ist, welche zumindest im Bereich des Kupplungskopfes 1 durch eine flexible, Bewegungen der Druckluftleitung 10 wenigstens teilweise tolerierende Verstärkungshülse 12 verstärkt ist. UM diese Eigenschaft zu realisieren, ist die Verstärkungshülse 12 weist die Verstärkungshülse in ihrer Mantelwandung ausgebildete Schlitze auf, welche sich jeweils in Umfangsrichtung gesehen nur über einen Teilkreis erstrecken und durch Stege voneinander getrennt sind, wie insbesondere aus Fig.2 hervorgeht.

Das Gehäuse 2 im Sinne der Erfindung umfasst sämtliche Bauelemente, welche übliche Gehäuse von Kupplungsköpfen aufweisen, wie beispielsweise die eingangs erwähnte Klaue und Führungsleiste.

Dabei ist vorzugsweise das gesamte Gehäuse 2 des Kupplungskopfes 1 zusammen mit der Verstärkungshülse 12 als einstückiger Spritzgussformling 14 aus Kunststoff ausgebildet, wobei ein freies Ende 16 der Druckluftleitung 10 durch die Öffnung der Verstärkungshülse 12 axial hindurch und in eine Anschlussbohrung 12 des anderen Anschlusses 6 hinein ragend mit dem Spritzgussformling 14 stoffschlüssig verbunden ist.

Dabei ist Ende 16 der Druckluftleitung 10 wenigstens im Bereich der Anschlussbohrung 12 mit dem Spritzgussformling 14, insbesondere mit dem Gehäuse 14 stoffschlüssig verbunden. Darüber hinaus kann die Druckluftleitung 10 zusätzlich aber auch über wenigstens einen Teil der Länge der Verstärkungshülse 12 mit dieser durch den Spritzgussprozess verbunden sein, besonders dann, wenn die Verstärkungshülse 12 relativ steif ausgeführt ist und sehr wenig Bewegung zulässt. Besonders bevorzugt ist das Gehäuse 2 des Kupplungskopfes 1 zusammen mit der Verstärkungshülse 12 ein einstückiger Spritzgussformling 14 aus Polyamid. Die Druckluftleitung 10 besteht vorzugsweise ebenfalls aus Polyamid.

Das andere Ende der Druckluftleitung ist demgegenüber bevorzugt mit einem üblichen und eingangs beschriebenen fitting versehen.

Gemäß eines Verfahrens zur Herstellung des Kupplungskopfes 1 wird das freie Ende 16 der Druckluftleitung 10 in ein hier nicht gezeigtes aber leicht vorstellbares Spritzgusswerkzeug zum Spritzgießen des aus der Verstärkungshülse 12 und dem Gehäuse 2 samt Montageauge 20 bestehenden Spritzgussformlings 14 aus vorzugsweise Polyamid an einer Stelle positioniert, an welcher der andere Anschluss 6 vorgesehen ist. Beim Spritzgießen des Spritzgussformlings 14 wird das Ende 16 der Druckluftleitung 10 sodann von dem Kunststoff umspritzt, um eine stoffschlüssige Verbindung zwischen dem Spritzgussformling 14 und der Druckluftleitung 10 auszubilden. Bevorzugt wird das freie Ende 16 der Druckluftleitung 10 vor dem Positionieren in dem Spritzgusswerkzeug vorgeheizt bzw. vorgewärmt.

Alternativ oder zusätzlich kann das freie Ende 16 der Druckluftleitung 10 auch in positionierter Stellung in dem Spritzgusswerkzeug vor dem Umspritzen vorgeheizt bzw. vorgewärmt werden.

Im weiteren ist bevorzugt auch ein Montageauge 20 zum Befestigen des Kupplungskopfes 1 am Rahmen des Anhängers Bestandteil des Gehäuses 2 und damit auch des einstückigen Spritzgussformlings 14 und wird mit diesem zusammen hergestellt.

Ergebnis des Prozesses ist daher eine unlösbare Baueinheit bestehend aus dem Gehäuse 2 und der Verstärkungshülse 12 als Spritzgussformling 14 einerseits und der Druckluftleitung 10 andererseits, welche bevorzugt zumindest abschnittsweise spiralförmig ausgebildet ist. Dabei ist das andere freie Ende der Druckluftleitung zur Verbindung mit weiteren Anschlüssen oder Leitungen der pneumatischen Bremsanlage bevorzugt mit einem lösbaren fitting versehen.

### Bezugszeichenliste

| | |
|---|---|
| 1 | Kupplungskopf |
| 2 | Gehäuse |
| 4 | Anschluss |
| 6 | Anschluss |
| 10 | Druckluftleitung |
| 12 | Verstärkungshülse |
| 14 | Spritzgussformling |
| 16 | Ende |
| 12 | Anschlussbohrung |
| 20 | Montageauge |

## Patentansprüche

1. Kupplungskopf (1) zur pneumatischen Verbindung der Bremsanlagen eines Zugfahrzeugs und eines Anhängers, wobei der Kupplungskopf ein Gehäuse (2) mit wenigstens einem Anschluss (6) für eine flexible Druckluftleitung (10) aufweist, welche zumindest im Bereich des Anschlusses (6) durch wenigstens eine flexible, Bewegungen der Druckluftleitung (10) wenigstens teilweise tolerierende Verstärkungshülse (12) verstärkt ist, **dadurch gekennzeichnet, dass** wenigstens ein den wenigstens einen Anschluss (6) aufweisender Teil des Gehäuses (2) des Kupplungskopfes (1) zusammen mit der Verstärkungshülse (12) als einstückiger Spritzgussformling (14) aus Kunststoff ausgebildet und ein freies Ende (16) der Druckluftleitung (10) durch die Verstärkungshülse (12) hindurch und in eine Anschlussbohrung (12) des Anschlusses (6) hinein ragend mit dem Spritzgussformling (14) stoffschlüssig verbunden ist.

2. Kupplungskopf nach Anspruch 1, **dadurch gekennzeichnet, dass** von seinem Gehäuse (2) wenigstens der den wenigstens einen Anschluss (6) aufweisende Teil des Gehäuses (2) zusammen mit der Verstärkungshülse (12) ein einstückiger Spritzgussformling (14) aus Polyamid ist.

3. Kupplungskopf nach Anspruch 1 oder 2, **dadurch gekennzeichnet, dass** die Druckluftleitung (10) wenigstens abschnittsweise spiralförmig ausgebildet ist.

4. Verfahren zur Herstellung eines Kupplungskopfes (1) nach einem der vorhergehenden Ansprüche, **dadurch gekennzeichnet, dass** ein freies Ende (16) der Druckluftleitung (10) in ein Spritzgusswerkzeug zum Spritzgießen des wenigstens aus der Verstärkungshülse (12) und dem den wenigstens einen Anschluss (6) aufweisenden Teil des Gehäuses (2) bestehenden Spritzgussformling (14) aus spritzgiessbaren Kunststoff an einer Stelle positioniert wird, an welcher der wenigstens eine Anschluss (6) vorgesehen ist und dass dann das Ende (16) der Druckluftleitung (10) beim Spritzgießen des Spritzgussformlings (14) von dem Kunststoff umspritzt wird, um eine stoffschlüssige Verbindung zwischen dem Spritzgussformling (14) und der Druckluftleitung (10) auszubilden.

5. Verfahren nach Anspruch 4, **dadurch gekennzeichnet, dass** wenigstens das freie Ende (16) der Druckluftleitung (10) vor dem Positionieren in dem Spritzgusswerkzeug vorgeheizt wird.

6. Verfahren nach Anspruch 4 oder 5, **dadurch gekennzeichnet, dass** wenigstens das feie Ende (16) der Druckluftleitung (10) vor dem Umspritzen vorgeheizt wird.

## Claims

1. Coupling head (1) for the pneumatic connection of the brake systems of a tractor vehicle and a trailer, with the coupling head comprising a housing (2) with at least one port (6) for a flexible compressed-air line (10) that is reinforced, at least in the zone of said port (6), by at least one reinforcing sleeve (12) tolerating movements of said compressed-air line (10) at least in parts, **characterised in that** at least one part of the housing (2) of said coupling head (1), which includes said at least one port (6), is formed, together with said reinforcing sleeve (12), as integral injection-moulded part (14) of synthetic resin, and that a free end (16) of said compressed-air line (10) is connected by material to said injection-moulded part (14) through said reinforcing sleeve (12) and with projection into a connection bore (12) of said port (6).

2. Coupling head according to Claim 1, **characterized in that** as part of said housing (2) said part of the housing (2), which includes said at least one port (6), together with said reinforcing sleeve (12), is an integral injection-moulded part (14) of polyamide.

3. Coupling head according to Claim 1 or 2, **characterized in that** said compressed-air line (10) has a spiral design at least in sections.

4. Method of manufacturing a coupling head (1) according to any of the preceding Claims, **characterized in that** a free end (16) of said compressed-air line (10) is positioned in an injection-moulding tool for injection-moulding of said part of said injection-moulded part (14) of a synthetic material suitable for injection moulding, which consists at least of said reinforcing sleeve (12) and said part of the housing (2) that includes said at least one port (6), at a site where said at least one port (6) is provided, and that then the synthetic resin is injected around the end (16) of said compressed-air line (10) during the process of injection-moulding of said injection-moulded part (14) so as to form a connection by material between said injection-moulded part (14) and said compressed-air line (10).

5. Method according to Claim 4, **characterized in that** at least said free end (16) of said compressed-air line is pre-heated prior to the positioning in said injection-moulding tool.

6. Method according to Claim 4 or 5, **characterized in that** at least the free end (16) of said compressed-air line (10) is pre-heated prior to the injection around it.

## Revendications

1. Tête (1) d'accouplement pour la mise en communication pneumatique des systèmes de freinage d'un véhicule de traction et d'une remorque, la tête d'accouplement comportant un corps (2) ayant au moins un raccord (6) pour un conduit (10) souple pour de l'air comprimé, conduit qui au moins dans la région du raccord (6) est renforcé par au moins un manchon (12) de renforcement souple tolérant au moins en partie des déplacements du conduit (10) pour de l'air comprimé, caractérisée en qu'au moins une partie, ayant au moins un raccord (6), du corps (2) de la tête (1) d'accouplement est, ensemble avec le manchon (12) de renforcement, formée en une pièce (14) moulée par injection d'un seul tenant en matière plastique et une extrémité (16) libre du conduit (10) pour de l'air comprimé est reliée à complémentarité de matière avec la pièce (14) moulée par injection en traversant le manchon (12) de renforcement et en pénétrant dans un trou (12) du raccord (6).

2. Tête d'accouplement suivant la revendication 1, **caractérisée en ce que** de son corps (2), au moins la partie ayant au moins un raccord (6) est, ensemble avec le manchon (12) de renforcement, une pièce (14) moulée par injection d'un seul tenant en polyamide.

3. Tête d'accouplement suivant la revendication 1 ou 2, **caractérisée en ce que** le conduit (10) pour de l'air comprimé est constitué au moins par tronçon en forme de spirale.

4. Procédé de fabrication d'une tête (1) d'accouplement suivant l'une des revendications, **caractérisée en ce que** l'on met une extrémité (16) libre d'un conduit (10) pour de l'air comprimé dans un outil de moulage par injection pour le moulage par injection de la pièce (14) moulée par injection en matière plastique pouvant être moulée par injection et constituée d' au moins le manchon (12) de renforcement et de la partie du corps (2) ayant au moins un raccord (6) en un endroit où au moins un raccord (6) est prévu et **en ce qu'**ensuite on recouvre par extrusion de la matière plastique l'extrémité (16) du conduit (10) pour de l'air comprimé lors du moulage par injection de la pièce (14) de moulage par injection pour former une liaison à complémentarité de matière entre la pièce (14) moulée par injection et le conduit (10) pour de l'air comprimé.

5. Tête d'accouplement suivant la revendication 4, **caractérisée en ce que** l'on chauffe au préalable au moins l'extrémité (16) libre du conduit (10) pour de l'air comprimé avant de le mettre en position dans l'outil de moulage par injection.

6. Tête d'accouplement suivant la revendication 4 ou 5, **caractérisée en ce que** l'on chauffe au préalable avant l'extrusion l'extrémité (16) libre du conduit (10) pour de l'air comprimé.
